# EUROPEAN PATENT SPECIFICATION

(11) **EP 2 275 478 B1**
(45) Date of publication and mention of the grant of the patent: **12.09.2012**
(21) Application number: 10169670.6
(22) Date of filing: 15.07.2010
(51) Int. Cl.: C08K 5/00

(54) **Flame retardant resin composition**
Flammhemmende Kunststoffzusammensetzung
Composition de resine ignifuge

(30) Priority: 17.07.2009 JP 2009168626
(43) Date of publication of application: 19.01.2011
(73) Proprietor: Daicel Polymer Ltd., Tokyo (JP)
(72) Inventor: Katano, Hirotomo, Himeji-shi Hyogo (JP)
(74) Representative: Grünecker, Kinkeldey, Stockmair & Schwanhäusser

(56) References cited:
- EP-A1- 1 452 567
- EP-A1- 1 486 536
- EP-A2- 1 081 183
- WO-A1-01/81470
- WO-A1-2005/061606
- WO-A1-2006/090751
- DE-A1- 10 103 238
- US-A1- 2007 049 667
- US-A1- 2007 149 661
- US-A1- 2007 197 696

## Description

The invention relates to a flame retardant resin composition and a structural part of an optical drive of the composition.

### Background of arts

Optical drives are widely used to record and play back in an optical disk, such as DVD or CD. The optical drive is composed of a drive tray for a disk or a traverse chassi etc.

A drive tray for a disk or the like is taken in or out frequently in use. A large mechanical strength is required for durability. The mechanical strength is conventionally strengthened with blending of a fibrous filler or another filler, such as glass fiber. Blending of glass fiber happens to cause warpage of a molded article and then bleeding out of a filler on the surface of a molded article, deteriorating smoothness in appearance. The drive tray for a disk is used with DVD, CD or the like set therein and is therefore required to have a very precise dimension. A small warpage and a small bleeding out of a filler are required during molding.

Then the drive tray for a disk with DVD or CD set therein is used for playback with applied continuous heat and therefore is required to have a large heat resistance.

JP-A 6-192553, JP-A 8-012864 and JP-A 8-073692 disclose a composition containing polycarbonate, polyester and a phosphorous flame retardant. These publications refer to flame retardancy, mechanical strength and heat resistance, but do not show combination with an inorganic filler such as glass fiber, nor accuracy of dimension, such as warpage etc, nor use for a structural part of an optical drive.

US 2007/01977696 A1 discloses a flame-retardant resin composition comprising a polyester, wherein the polyester comprises from about 1 to about 15 mol% of an unsaturated diol; a flame retardant compound, an organic compound comprising at least one carboxyl reactive group.

US 2007/0149661 A1 discloses a composition comprising a polycarbonate composition; a fibrous reinforcing composition comprising glass fibers of a combination of glass fibers and carbon fibers; a flame retardant composition comprising a phosphorus-based flame retardant; and a synergist composition.

US 2007/0049667 relates to a molding composition comprising polyester or its blends with other thermoplastic in the presence of a fluidity enhancer to decrease melt viscosity and improve processability.

WO 2006/090751 A1 discloses a flame-retardant resin composition composed of a base resin, a halogen flame retardant, an organic phosphinic acid or a salt thereof, and a flame retardant assistant which are different from the base resin.

WO 2005/061606 A1 relates to a fireproof thermoplastic composition comprising a specific fireproofing system which is based on a phosphinic acid salt and melamine derivatives.

EP 1452567 A1 relates to a flame-retardant resin composition which comprises 10 to 300 parts by weight of a flame retardant (B) and 1 to 200 parts by weight of an inorganic filler (C) (a glass fiber and/or a glass flake), relative to 100 parts by weight of a base resin (A).

DE 10103238 A1 relates to a flame-retardant polycarbonate composition comprising inorganic fillers.

EP 1486536 A1 discloses a flame-retardant composition comprising a base resin, a flame retardant and a styrenic resin having a meltflow rate of not more than 8g/10 minutes in according with JIS K7210.

WO 01/81470 A1 discloses a flame-retardant polyester composition comprising a polyester resin or polyester resin blend component; at least one nitrogen-containing compound selected from the group of triazine, guanidine, or (iso)cyanurate compounds, a zinc and/or boron-containing compound; a non-fibrillating poly(tetrafluoroethylene) and a phosphorus-containing compound.

EP 1081183 A2 relates to a composition containing a flame retarding effective additive of at least one polyphosphate, a sulfur containing compound, catalyst and a nitrogen-containing compound such as melamine.

### Summary of the invention

The invention relates to a flame retardant resin composition from which a molded article having an improved mechanical strength and an improved heat resistance with a small warpage during molding is produced and then a structural part of an optical drive of the composition.

The invention provides a flame-retardant resin composition, containing 100 parts by mass of (A) resin component containing 60 to 90 percent by mass of (A-1) polycarbonate resin and 40 to 10 percent by mass of (A-2) polyester resin, 5 to 15 parts by mass of (B) a phosphoric ester having formula (I) based on 100 parts by mass of (A), 0.01 to 0.5 part by mass of (C) an organic phosphoric ester, provided that the phosphoric ester having formula (I) is excluded, based on 100 parts by mass of (A), and 15 to 60 parts by mass in total of (D) comprising (D-1) glass fiber and (D-2) a scale-like inorganic filler selected from the group consisting of mica, glass flakes, talc and graphite, based on 100 parts by mass of (A), a mass ratio of (D-1) component to (D-2) component of (D) component, (D-1)/(D-2), being within the range of 0.2 to 1.5: 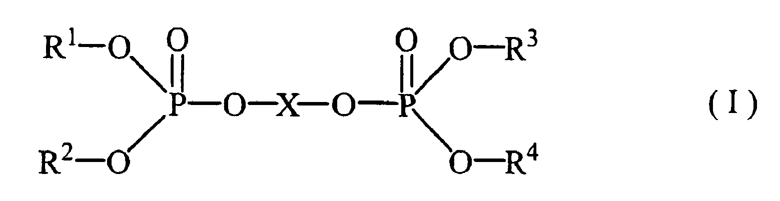 in which X is a divalent aromatic group and R¹, R², R³ and R⁴ is a substituted or non-substituted phenyl.

The invention provides a structural part of an optical drive of the composition.

According to the invention flame retardant resin composition, a molded article is produced with a small warpage and bleeding out of a filler such as glass fiber and an excellent heat resistance. This molded article is useful as a structural part of an optical drive of the composition.

### Detailed explanation of the invention

### <flame retardant resin composition>

Component (A) of the invention is resin component composed of (A-1) polycarbonate and (A-2) polyester.

(A-1) polycarbonate is available conventionally, selected from those of JP-A 6-192553, paragraphs 0011∼0026,JP-A 8-012864, paragraphs 0010 and 0011, and JP-A 8-073692, paragraph 0010.

(A-2) polyester is available conventionally, selected from polyalkylene terephthalates disclosed by JP-A 6-192553, paragraphs 0027∼0032, aromatic polyesters disclosed in JP-A 8-012864, paragraphs 0012∼0017 and polyalkylene terephthalates disclosed by JP-A 8-073692, paragraphs 0011 and 0012.

In component (A), the content of (A-1) component of polycarbonate is 60 to 90 percent by mass, preferably 60 to 80 percent by mass. The content of (A-2) component of polyester is 40 to 10 percent by mass, preferably 40 to 20 percent by mass.

When the contents of (A-1) component and (A-2) component fall within the above shown range, it is preferably contributed that the warpage of the molded article is small and has improvements in view of flame retardancy and resistance to chemicals, durability to lubricant or processing oil.

(B) component of the invention is a phosphoric ester having formula (I). The phosphoric ester is available conventinally, disclosed also in JP-A 8-12864, claims and paragraphs 0040∼0044.
In the composition, the content of (B) component of a phosphoric ester is 5 to 15 parts by mass, preferably 5 to 12 parts by mass, based on 100 parts by mass of (A).

(C) component of an organic phosphoric ester is available conventionally, selected from those disclosed in JP-A 8-073692, paragraph 21. Besides mono-, di- or triesters of orthophosphoric acid with fatty acid can be used. (C) component of an organic phosphoric ester includes no phosphoric ester having formula (I) in scope.

In the composition, the content of (C) component of an organic phosphoric ester is 0.01 to 0.5 part by mass, preferably 0.05 to 0.2 part by mass, based on 100 parts by mass of (A).

(D) component of the invention is a combination of (D-1) glass fiber with (D-2) a scale-like inorganic filler. When (D-1) is combined with (D-2) in the determined amounts in the invention composition, a molded article is improved in view of warpage, appearance (bleeding extent of (D)) and heat resistance.

(D-1) component of glass fiber is available conventionally. It is preferable to have an average length of 1.0 to 5.0 mm, more preferably 1.5 to 3.0 mm. It is preferable to have an average diameter of 5 to 20 µm, more preferably 6 to 13µm. The average length and the average diameter are indicated as values of fed glass fiber.

(D-2) component of a scale-like inorganic filler is selected from the group consisting of mica, glass flakes, talc, and graphite

It is preferable that (D-2) component of a scale-like inorganic filler has a flake's weight-average diameter of a flake of 10 to 2000 µm, more preferably 50 to 1000 µm, and a weight-average aspect ratio of 10 to 100, more preferably 30 to 70.
In the composition, the content of (D), that is, the total contents of (D-1) and (D-2), is 15 to 60 parts by mass, preferably 20 to 50 parts by mass, based on 100 parts by mass of (A). It is preferable that the content of (D-1) is not more than 25 parts by mass.

In (D) component, a mass ratio of (D-1)component to (D-2)component, (D-1)/(D-2), is within the range of 0.2 to 1.5, preferably the range of 0.2 to 1.5, more preferably the range of 0.2 to 1.2, still more preferably the range of 0.2 to 1.1.

The invention composition may contain, as other components, a conventional other flame retardant, a flame retarding assistant, a thermal stabilizer, a lubricant, a light stabilizer, an antioxidant, a coloring agent, a releasing agent, an antistatic etc.

### <structural part of an optical drive>

The structural part of an optical drive of the invention is molded from the above shown flame retardant resin composition, applicable for example to a drive tray for a disk or a traverse chassi.

The structural part of an optical drive of the invention meets the below shown requirements (a), (b) and (c).

### <requirement (a)>

When a flat plate having dimensions of 120×120×2mm, prepared by injection, is fixed at a one edge on a horizontal surface, a distance between the other edge of the plate and the horizontal plane is less than 0.5 mm preferably less than 0.3 mm.

### <requirement (b)>

Observing the flat plate used for requirement (a) with the eyes, (D-1) component of glass fiber and/or (D-2) component of a scale-like inorganic filler does not appear on the surface, nor bleeding out, that is, having a smooth surface.

### <requirement (c)>

A load-deflecting temperature according to ISO 75 is higher than 95 °C, preferably 100 °C or higher.

### Examples

The present invention is concretely illustrated through Examples below. These are only illustrative and the invention is not limited by them.

### Examples and Comparative Examples

Using a twin-screw extruder, TEX30α (screw diameter 32mm), manufactured by Japan Steel Works, Ltd., components shown in Table 1 were melt-kneaded at 270°C, extruded in strand, and then cooled and cut to prepare pellets (screw rotation number: 250rpm, feeding amount: 30 kg/hr). The glass fiber was fed in the course by using a side feed. The following tests were conducted on a composition of each Example. Results are shown in Table 1.

### <Warpage requirement (a)>

One edge of each of the flat plates of 120×120×2mm, prepared by injection molding using the compositions of Examples and Comparative Examples, was fixed on the horizontal surface, and the distance (mm) generated between the other edge and the horizontal surface was determined.

### <Appearance requirement (b)>

The flat plates prepared in the warpage test were observed with the eyes, to confirm whether glass fiber of (D-1) component and/or scale-like inorganic filler of (D-2) component bled out on the surface or not.
○: bleeding out is not observed
×: bleeding out is observed

### <Heat resistance requirement (c)>

Evaluated by deflection temperature (°C) under load determined in accordance with ISO 75.

### <Flexural modulus>

Determined in accordance with ISO 178.

### <Impact retardancy>

Charpy impact strength was determined in accordance with ISO 179/1eA.

### <Flame retradancy>

A test piece of 0.75mm in thickness and a test piece of 1.5mm in thickness, prepared by the compositions of Examples and Comparative Examples, were evaluated by the vertical burning test (V-0 to V-2) or horizontal burning test (HB) of UL94.

### < (A) Component>

PC (polycarbonate): manufactured by Mitsubishi Engineering-Plastics Corporation, Iupilon S2000F, viscosity average molecular weight 22000 to 23000

PET (polyethylene terephthalate): Bell Polyester Products, Inc., BELLPET EFG6C

### < (B) Component>

Phosphoric ester of the formula (I): manufactured by DAIHACHI CHEMICAL INDUSTRY CO., LTD., PX200 (in the formula (I), X represents a bivalent aromatic group; and R¹, R², R³ and R⁴ each represent a phenyl group substituted with two methyl groups)

### <(C) Component>

An organic phosphoric ester: manufactured by ADEKA Corporation, Adekastab AX71, phosphoric acid octadecyl alkyl ester

### < (D) Component>

(D-1) Glass fiber: manufactured by Nitto Boseki Co., Ltd., CS 3PE 937 S, average fiber length 3mm, average fiber diameter 13µm

(D-2) Mica: manufactured by Kuraray trading Co., Ltd., Suzorite mica 200-HK (weight average aspect ratio 50, weight average flake diameter 90µm)

### <Other Components>

PTFE: polyfuron PTFE D210C (manufactured by Daikin Industries, Ltd., fluorinated polyethylene content 60 mass %, average particle diameter 0.22µm)

Lubricant: manufactured by Allied Signal Inc., AC polyethylene AC-9A (including polyethylene wax as the main component)

Antioxidant 1: manufactured by Ciba Specialty Chemicals Inc., Irganox 1010 (including pentaerythritol·tetrakis[3-(3,5-di-t-butyl-4-hydroxyphenyl)propionate] as the main component)

Antioxidant 2: manufactured by Sumitomo Chemical CO., Ltd., SUMILIZER® TPS (including distearyl-13,3'-thiodipropionate as the main component)

**Table 1**

| | | Examples | | | | | | Comparative Examples | | | | | | | |
|---|---|---|---|---|---|---|---|---|---|---|---|---|---|---|---|
| | | 1 | 2 | 3 | 4 | 5 | 6 | 1 | 2 | 3 | 4 | 5 | 6 | 7 | 8 |
| (A) | (A-1)PC | 70 | 70 | 70 | 60 | 90 | 90 | 70 | 70 | 70 | 70 | 70 | 50 | 70 | 70 |
| | (A-2)PET | 30 | 30 | 30 | 40 | 10 | 10 | 30 | 30 | 30 | 30 | 30 | 50 | 30 | 30 |
| (B) | Phosphoric ester of the formula (I) | 10 | 10 | 10 | 10 | 10 | 10 | 10 | 10 | 10 | 10 | 10 | 10 | - | 20 |
| (C) | Organic phosphoric ester | 0.1 | 0.1 | 0.1 | 0.1 | 0.1 | 0.1 | 0.1 | 0.1 | 0.1 | 0.1 | 0.1 | 0.1 | 0.1 | 0.1 |
| (D) | (D-1) Glass fiber | 10 | 14 | 24 | 14 | 14 | 10 | - | 28 | - | 30 | 10 | 14 | 14 | 14 |
| | (D-2) Mica | 10 | 14 | 24 | 14 | 14 | 40 | - | - | 28 | 10 | 60 | 14 | 14 | 14 |
| | (D-1)/(D-2) | 1 | 1 | 1 | 1 | 1 | 0.25 | - | - | - | 3 | 0.167 | 1 | 1 | 1 |
| Other | PTFE | 1 | 1 | 1 | 1 | 1 | 1 | 1 | 1 | 1 | 1 | 1 | 1 | 1 | 1 |
| | Lubricant | 0.5 | 0.5 | 0.5 | 0.5 | 0.5 | 0.5 | 0.5 | 0.5 | 0.5 | 0.5 | 0.5 | 0.5 | 0.5 | 0.5 |
| | Antioxidant 1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Antioxidant 2 | 0.1 | 0.1 | 0.1 | 0.1 | 0.1 | 0.1 | 0.1 | 0.1 | 0.1 | 0.1 | 0.1 | 0.1 | 0.1 | 0.1 |
| (a) | Warpage (mm) | 0.21 | 0.25 | 0.28 | 0.25 | 0.25 | 0.25 | 0.05 | 0.9 | 0.15 | 0.7 | 0.2 | 0.5 | 0.3 | 0.25 |
| (b) | Appearance | O | O | O | O | O | O | O | O | O | x | x | O | O | O |
| (c) | Heat resistance (°C) | 100 | 102 | 105 | 100 | 110 | 110 | 90 | 105 | 95 | 105 | 104 | 100 | 125 | 85 |
| Flexural modulus (MPa) | | - | 6400 | 8700 | - | - | - | 2300 | 6900 | - | - | - | - | - | - |
| Impact retardancy (kJ/cm2) | | 4 | 5 | 6 | 5 | 5 | 4 | 2 | 7 | 2 | 6 | 4 | 5 | 5 | 5 |
| Flame retardancy | UL94(0.75mm) | V-1 | V-1 | V-1 | V-1 | V-1 | V-1 | V-1 | V-1 | V-1 | V-1 | V-1 | V-2 | HB | V-1 |
| | UL94(1.5mm) | V-0 | V-0 | V-0 | V-0 | V-0 | V-0 | V-0 | V-0 | V-0 | V-0 | V-0 | V-1 | HB | V-0 |

As is apparent from the comparison of Examples and Comparative Examples 1 to 5 in Table 1, the composition according to the present invention satisfies the requirements (a), (b) and (c), and is excellent in mechanical strength, therefore, it is suitable for a structural part of an optical drive.

## Claims

1. A flame retardant resin composition, comprising 100 parts by mass of (A) resin component comprising 60 to 90 percent by mass of (A-1) polycarbonate resin and 40 to 10 percent by mass of (A-2) polyester resin, 5 to 15 parts by mass of (B) a phosphoric ester having formula (I), based on 100 parts by mass of (A), 0.01 to 0.5 part by mass of (C) an organic phosphoric ester, provided that the phosphoric ester having formula (I) is excluded, based on 100 parts by mass of (A), and 15 to 60 parts by mass in total of (D) comprising (D-1) glass fiber and (D-2) a scale-like inorganic filler selected from the group consisting of mica, glass flakes, talc and graphite, based on 100 parts by mass of (A), a mass ratio of (D-1)component to (D-2)component of (D) component, (D-1)/(D-2), being within the range of 0.2 to 1.5: 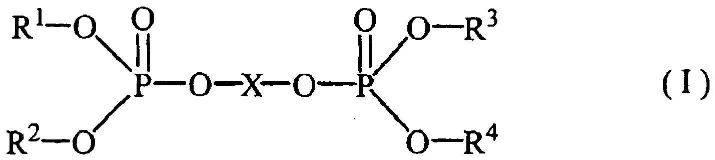 in which X is a divalent aromatic group and R¹, R², R³ and R⁴ is a substituted or non-substituted phenyl.

2. The flame retardant resin composition of claim 1, in which the content of (D-1) of glass fiber is not more than 25 parts by mass, based on 100 parts by mass of (A).

3. A structural part of an optical drive, being composed of the flame retardant resin composition of claim 1 or 2.

4. A structural part of an optical drive, being composed of the flame retardant resin composition of claim 1 or 2, meeting at least requirements (a), (b) and (c) below described:
<requirement (a)>
When a flat plate having dimensions of 120*120*2mm, prepared by injection, is fixed at a one edge on a horizontal surface, a distance between the other end of the plate and the horizontal plane is less than 0.5 mm;
<requirement (b)>
Observing the flat plate used for requirement (a) with the eyes, (D-1) component of glass fiber and/or (D-2) component of a scale-like inorganic filler does not bleed out on the surface;
and
<requirement (c)>
A load-deflecting temperature according to ISO 75 is higher than 95°C.

5. The structural part of an optical drive of claim 3 or 4, being a drive tray for a disk or a traverse chassi.

## Patentansprüche

1. Flammenhemmende Harzzusammensetzung, umfassend 100 Masseteile des Harzbestandteils (A) umfassend 60 bis 90 Masseprozent Polycarbonatharz (A-1) und 40 bis 10 Masseprozent Polyesterharz (A-2), 5 bis 15 Masseteile eines Phosphorsäureesters (B) mit der Formel (I), bezogen auf 100 Masseteile von (A), 0,01 bis 0,5 Masseteile eines organischen Phosphorsäureesters (C), unter der Voraussetzung, dass der Phosphorsäureester mit der Formel (I) ausgeschlossen ist, bezogen auf 100 Masseteile von (A), und insgesamt 15 bis 60 Masseteile von (D), umfassend Glasfasern(D-1) und einen schuppenartigen anorganischen Füllstoff (D-2) gewählt aus der Gruppe bestehend aus Glimmer, Glasflocken, Talg und Graphit, bezogen auf 100 Masseteile von (A), wobei ein Masseverhältnis des Bestandteils (D-1) zu dem Bestandteil (D-2) des Bestandteils (D), (D-1)/(D-2), in dem Bereich von 0,2 bis 1,5 liegt: 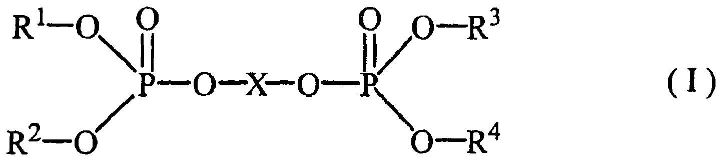 wobei x eine zweiwertige aromatische Gruppe ist und R¹, R², R³ und R⁴ ein substituiertes oder nicht substituiertes Phenyl ist.

2. Flammenhemmende Harzzusammensetzung nach Anspruch 1, wobei der Anteil an Glasfasern (D-1) bezogen auf 100 Masseteile von (A). nicht mehr als 25 Masseteile beträgt.

3. Bauteil eines optischen Laufwerks, bestehend aus der flammenhemmenden Harzzusammensetzung nach Anspruch 1 oder 2.

4. Bauteil eines optischen Laufwerks, bestehend aus der flammenhemmenden Harzzusammensetzung nach Anspruch 1 oder 2, welche wenigstens die unten beschriebenen Anforderungen (a), (b) und (c) erfüllt:
Anforderung (a):
Wenn eine flache Platte mit den Abmessungen 120*120*2 mm, hergestellt durch Spritzgießen, an einer Kante einer horizontalen Oberfläche befestigt ist, beträgt ein Abstand zwischen dem anderen Ende der Platte und der horizontalen Ebene weniger als 0,5 mm;
Anforderung (b):
Wenn die für die Anforderung (a) verwendete flache Platte mit den Augen beobachtet bzw.
überwacht wird, blutet der Glasfaserbestandteil (D-1) und/oder der Bestandteil aus schuppenartigem anorganischem Füllstoff (D-2) nicht aus der Oberfläche aus; und
Anforderung (c):
Eine Lastverformungstemperatur gemäß ISO 75 ist höher als 95 °C.

5. Bauteil eines optischen Laufwerks nach Anspruch 3 oder 4, welches ein Träger für eine Disk oder ein Traverse-Chassis ist.

## Revendications

1. Composition de résine ignifugeante, comprenant 100 parties en masse d'un composant résine (A) comprenant 60 à 90 % en masse d'une résine de polycarbonate (A-1) et 40 à 10 % en masse d'une résine de polyester (A-2), 5 à 15 parties en masse d'un ester phosphorique (B) de formule (I), pour 100 parties en masse de (A), 0,01 à 0,5 partie en masse d'un ester phosphorique organique (C), à l'exclusion de l'ester phosphorique de formule (I), pour 100 parties en masse de (A), et 15 à 60 parties en masse au total de (D) comprenant des fibres de verre (D-1) et une charge inorganique en forme d'écailles (D-2) choisie dans l'ensemble constitué par le mica, les copeaux de verre, le talc et le graphite, pour 100 parties en masse de (A), le rapport en masse du composant (D-1) sur le composant (D-2) du composant (D), (D-1)/(D-2), étant situé dans la plage allant de 0,2 à 1,5 : 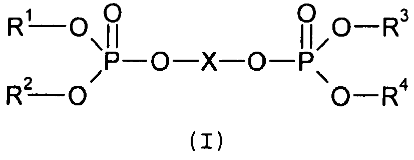 dans laquelle X est un groupe aromatique divalent et R¹, R², R³ et R⁴ sont phényle substitué ou non substitué.

2. Composition de résine ignifugeante selon la revendication 1, dans laquelle la teneur en fibres de verre (D-1) ne dépasse pas 25 parties en masse pour 100 parties en masse de (A).

3. Pièce structurelle d'un lecteur optique, qui est composée de la composition de résine ignifugeante selon la revendication 1 ou 2.

4. Pièce structurelle d'un lecteur optique, qui est composée de la composition de résine ignifugeante selon la revendication 1 ou 2, satisfaisant au moins aux exigences (a), (b) et (c) décrites ci-dessous :
exigence (a)
quand une plaque plate ayant pour dimensions 120 x 120 x 2 mm, préparée par injection, est fixée à un bord d'une surface horizontale, la distance entre l'autre extrémité de la plaque et le plan horizontal est inférieure à 0,5 mm ;
exigence (b)
si l'on observe à l'oeil la plaque plate utilisée pour l'exigence (a), le composant (D-1) en fibres de verre et/ou le composant (D-2) en charge inorganique en forme d'écailles ne suintent pas sur la surface ; et
exigence (c)
la température de fléchissement sous charge, conformément à la norme ISO 75, est supérieure à 95°C.

5. Pièce structurelle d'un lecteur optique selon la revendication 3 ou 4, qui est un plateau de lecture pour un disque ou une traverse châssis.
